# EUROPEAN PATENT APPLICATION

(11) **EP 1 669 967 A2**
(43) Date of publication of application: **14.06.2006**
(21) Application number: 05026763.2
(22) Date of filing: 07.12.2005
(51) Int. Cl.: G09G 3/20, G09G 3/36

(54) **Apparatus and method for driving display unit of a mobile communication terminal**

(30) Priority: 08.12.2004 KR 2004103144
(71) Applicant: LG Electronics Inc., Yongdungpo-gu Seoul (KR)
(72) Inventor: An, Jin-Woo, Dongan-Gu Anyang Gyeonggi-Do (KR)
(74) Representative: Katérle, Axel

(57) **Abstract**

An apparatus and method for driving a display unit of a mobile communication terminal includes: a memory that stores image data by line units of a frame, each line unit including a predetermined number of row lines; at least one column driver that receives the stored image data and a vertical synchronization signal and outputs a signal voltage to column addresses based on the received image data and the received vertical synchronization signal; at least one row driver that receives a horizontal synchronization signal corresponding to the vertical synchronization signal and outputs a scan voltage to row addresses based on the received horizontal synchronization signal; and a display panel that displays the image data thereon based on the output signal voltage and the output scan voltage.

## Description

### BACKGROUND OF THE INVENTION

### 1. Field of the Invention

The present invention relates to a mobile communication terminal, and to an apparatus and method for driving a display unit of a mobile communication terminal, which efficiently improves image quality of the display unit.

### 2. Description of the Background Art

Generally, a mobile communication terminal is a device that is configured to communicate with another device or user via radio paging and wireless connection provided through the switching control of a MSC (mobile switching center) even while moving almost at any time and anywhere within a service area covered by a BS (base station). In a recent mobile communications, a data communication for symbols, numbers, letters, voices etc., and a multimedia communication for video signals are generally provided. In particular, there is a growing user interest in using a camera associated with the mobile communication terminal to capture still images or video clips, and a display device used to display such images and videos. A particular interest from users is growing in performance of the display and quality of the displayed images. Also, many users recently tend to prefer a relatively large size of the display screen.

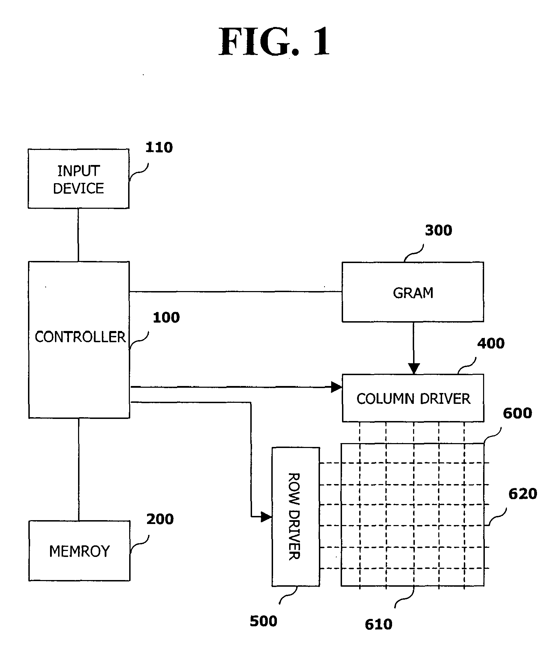

The mobile communication terminal may employ a LCD (liquid crystal display) as its display device, and the LCD performs to display a variety of image data through pixels arranged in a matrix format. An apparatus for driving the display unit of a mobile communication terminal according to the related art will be described with reference to FIG. 1.

FIG. 1 is a view showing an apparatus for driving a display unit of a mobile communication terminal according to the related art.

As shown in FIG. 1, the apparatus for driving a display unit of a mobile communication terminal according to the related art includes an input device 110 for receiving image data to be displayed; a memory 200 for storing input image data; a controller 100 for receiving the stored image data and a synchronization signal and outputting the received image data and the synchronization signal; a GRAM (graphic random access memory) 300 for storing the output image data by a frame unit of row lines; a column driver 400 for receiving the stored image data and the synchronization signal and outputting a signal voltage to column addresses based on the received image data and synchronization signal; a row driver 500 for outputting a scan voltage to row addresses corresponding to the output signal voltage based on the received synchronization signal; and a display panel 600 for displaying the received image data thereon based on the scan voltage output from the row driver and the signal voltage output from the column driver. Here, the synchronization signal includes a vertical synchronization signal input into the column driver 400 and a horizontal synchronization signal input into the row driver 500.

The apparatus constructed as such for driving a display unit of a mobile communication terminal according to the related art will be described in more detail.

First, the controller 100 outputs operation information for controlling and monitoring various functions of the mobile communication terminal, outputs messages, such as SMS (Short Message Service) messages, MMS (Multimedia Message Service) messages, and graphical messages to the GRAM 300, and outputs a vertical synchronization signal and a horizontal synchronization signal.

The GRAM 300 receives and stores the image data provided by the controller by a frame unit of row lines, and outputs the stored image data to the column driver 400. If it is assumed that the display panel 600 has a resolution of 176 x 240 pixels, and one pixel has a length of 18 bits, the GRAM 300 storing the image data requires a capacity of more than 176 x 240 x 18 bits (i.e., 760,320 bits) in order to properly store the image data provided in the frame unit of row lines.

The column driver 400 then outputs the image data received from the GRAM 300 by a frame unit of row lines in a vertical direction to the display panel 600 according to the vertical synchronization signal applied in the order of column address. The column driver 400 drives column electrodes 610 of the display panel 600, and serves to actually apply image data, i.e., a signal voltage, to each pixel of the display panel 600 through the column electrodes 610.

The row driver 500 disperses the image data outputted by the column driver 400 by a frame unit of row lines in the vertical direction of the display panel 600 in a horizontal direction based on the applied horizontal synchronization signal in the order of row addresses. The row driver 500 drives row electrodes 620, and generates a scan signal for sequentially selecting the row electrodes 620.

Accordingly the image data is displayed on display panel 600, configured by units of pixels in which the column electrodes 610 and the row electrodes 620 cross each other to form a matrix, by the column driver 400 applying a signal voltage to the column electrodes 610 and the row driver 500 applying a scan voltage to the row electrodes 620.

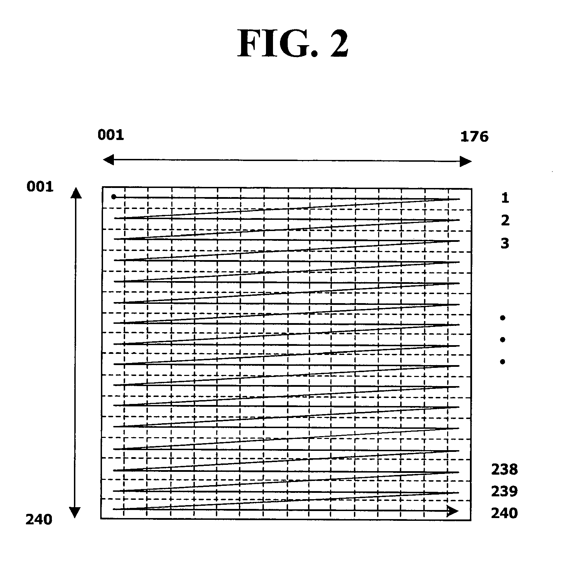

Hereinafter, the direction and order of displaying the image data on a display unit of a mobile communication terminal according to the related art will be described with reference to FIG. 2.

FIG. 2 is a view for explaining the direction and order of display of image data on a display unit of a mobile communication terminal according to the prior art.

As shown in FIG. 2, the display unit of the mobile communication terminal according to the related art, with row address 001, drives 176 pixels in a transverse direction, beginning with the first column address 001 at the left upper end to the last column address 176 at the right upper end. The display unit then, with row address 002, sequentially drives the 176 pixels from the first column address to the last column address. This operation of display then continues until row address 240 is reached.

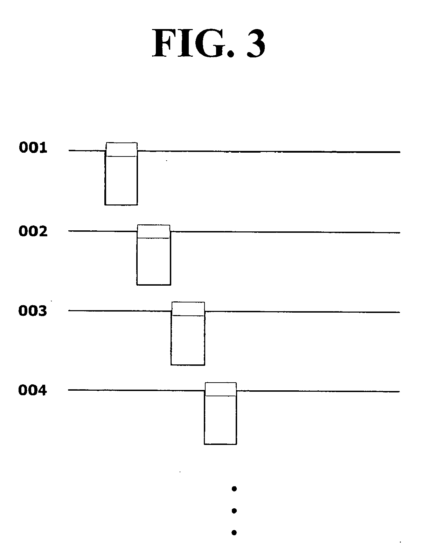

Hereinafter, a timing state for a scan voltage applied to the row electrodes of the display panel will be described with reference to FIG. 3.

FIG. 3 is a view showing a timing state for a scan voltage outputted to row electrodes of a display panel according to the related art.

As shown in FIG. 3, the row driver of the display panel according to the related art is driven line by line, and thus a scan voltage, beginning with row address 001 up to row address 240, is sequentially outputted to the row electrodes of the display panel based on a horizontal synchronization signal.

However, the apparatus for controlling the display unit of the mobile communication terminal according to the related art has a problem in that, because the display panel is driven line by line beginning from the uppermost line, the display quality in the lower portion of the display screen is degraded relative to the upper portion of the display screen when the display screen receives an insufficient number of bits, which often occurs due to a transmission bit control.

### BRIEF DESCRIPTION OF THE INVENTION

Therefore, a feature of a present embodiment is to provide an apparatus and method for driving a display unit of a mobile communication terminal, which improves image quality and reduces manufacturing costs by storing image data in a memory (e.g., a graphic random access memory (GRAM)) by line units of a frame, each line unit including a predetermined number of row lines, and to display the stored image data beginning with a row line at or near the center of the display unit.

According to one aspect of the present invention, an apparatus for driving a display unit of a mobile communication terminal includes a memory that stores image data by line units of a frame, each line unit including a predetermined number of row lines; at least one column driver that receives the stored image data and a vertical synchronization signal and outputs a signal voltage to column addresses based on the received image data and the received vertical synchronization signal; at least one row driver that receives a horizontal synchronization signal corresponding to the vertical synchronization signal and outputs a scan voltage to row addresses based on the received horizontal synchronization signal; and a display panel that displays the image data thereon based on the output signal voltage and the output scan voltage.

According to another aspect of the present invention, a method for driving a display unit of a mobile communication terminal includes storing image data in a memory by line units of a frame, each line unit including a predetermined number of row lines; receiving the stored image data and a vertical synchronization signal and outputting a signal voltage to column addresses based on the received image data and the received vertical synchronization signal; receiving a horizontal synchronization signal corresponding to the vertical synchronization signal and outputting a scan voltage to row addresses based on the received horizontal synchronization signal; and displaying the image data on a display panel based on the outputted signal voltage and the outputted scan voltage.

According to another aspect of the present invention, an apparatus for driving a display unit of a mobile communication terminal includes a memory that stores image data by line units of a frame, each line unit including a predetermined number of row lines; at least one column driver that receives the stored image data from the memory, receives a vertical synchronization signal, and outputs signal voltages to column addresses based on the received image data and the received vertical synchronization signal; at least one row driver that receives a horizontal synchronization signal corresponding to the vertical synchronization signal, and outputs scan voltages to row addresses based on the received horizontal synchronization signal; and a processor that cooperates with the memory, the column driver, and the row driver, to display of the image data based on the output signal voltages from the column driver and the scan voltages from the row driver.

The foregoing features of the present embodiments will become more apparent from the following detailed description of the present embodiments when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a view showing an apparatus for driving a display unit of a mobile communication terminal according to the related art;
FIG. 2 is a view for explaining the direction and order of display of image data on a display unit of a mobile communication terminal according to the related art;
FIG. 3 is a view showing a timing state for a scan voltage outputted to row electrodes of a display panel according to the related art;
FIG. 4 is a view showing an exemplary apparatus for driving a display unit of a mobile communication terminal according to the present invention;
FIG. 5 is a flow chart showing an exemplary method for driving a display unit of a mobile communication terminal according to the present invention;
FIG. 6 is a view for explaining the direction and order of displaying image data on a display unit of a mobile communication terminal according to the present invention; and
FIGs. 7A to 7D are views showing a timing state for a scan voltage outputted to row electrodes of a display panel according to the present invention.

### DETAILED DESCRIPTION OF THE INVENTION

With reference to the accompanying drawings, the following description explains some embodiments of an apparatus and method for driving a display unit of a mobile communication terminal, which is configured to improve display image quality and reduce manufacturing costs by storing image data in a memory (e.g., a graphic random access memory (GRAM)) by line units of a frame, each line unit including a predetermined number of row lines, and displaying the stored image data starting from a line at or near the center of the display unit. The apparatus and method for driving a display unit of a mobile communication terminal according to the present invention are applicable to various types of display panels with column electrodes and row electrodes that cross each other to form a matrix pattern of pixel cells.

With the increase of multimedia data processing, video reproduction is becoming a key requirement for various display technologies. For the sake of explanation, liquid crystal display (LCD) devices and systems will be described, but the present invention is not intended to be limited to LCDs, as various concepts of the present invention are applicable to a wide variety of other display techniques.

A typical LCD system may be comprised of an LCD panel having a matrix of pixel cells with RGB filters to enable color reproduction; a backlight driver with a light sensor to provide necessary light to the LCD panel; one or more row drivers to operate the rows of pixel cells; a timing controller with a clock driver to control the necessary timing of the row drivers; one or more column drivers to operate the columns of pixel cells upon receiving image (video) input data; a gamma generator to control the column drivers based upon the non-linear relationship (i.e., a S-shaped gamma curve) between the light emitted from a pixel and the voltage applied to it; and a power supply with a reference voltage generator to supply necessary supply voltages to all these components.

The operation of the LCD system depends upon the row and column drivers, gamma correction, and multiple supply voltages. The row drivers are power drivers used to select which row will have its data written at a given time. The column drivers convert the digital video data input to the display into an analog voltage to be stored across each pixel cell, whereby the brightness of each pixel is determined by an analog voltage level stored across that pixel. The timing controller controls the timing of a scanning mechanism used to handle the writing of data into the LCD panel. The related art timing controller resets the row and column drivers to start writing data in at the top of the display and scan one row at a time to the bottom of the display.

The present inventors recognized that the central region of a display screen (e.g., LCD panel) may suffer from image quality degradation (compared to other regions of the display screen) due to various factors, including an insufficient number of bits being received due to transmission bit rate controlling. Here, the central region of the display may be where relatively important image data are to be displayed (i.e., images that usually have objects of interest are centered on the screen), and thus image quality may be more important at such central regions of the display.

Essentially, the present invention enhances and improves the scanning mechanism and the timing controller, based upon how the image (video) data are stored. Namely, instead of storing the image data by a frame as in the related art, the present invention stores image data by line units, each line unit including at least one scan line or row line, whereby a pre-set number of lines within one line unit are stored at a time, instead of storing image data for an entire frame.

Then, the scanning mechanism and the timing controller operate to control the row and column drivers to start writing data on at least two divided portions of the display screen. Instead of starting at the top of the display screen and scanning one row at a time to the bottom of the display screen (as done in the related art), the present invention starts writing data at a central portion of the display screen.

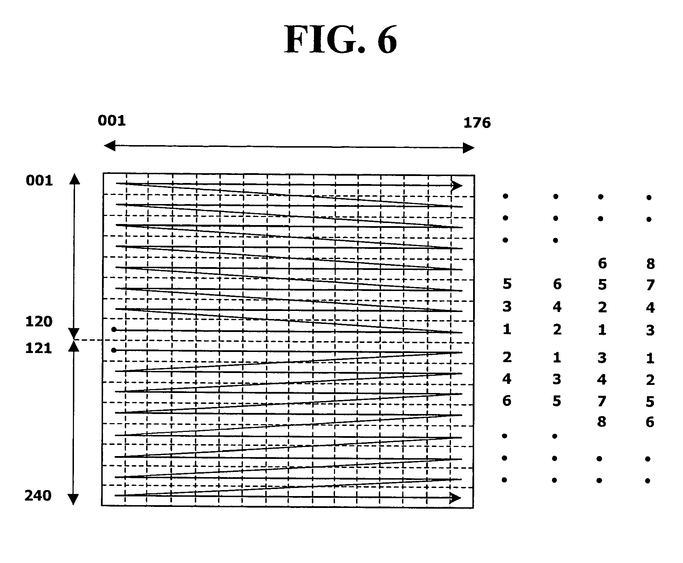

Namely, for the purpose of achieving the scanning according to the present invention, the display screen may be divided into at least two portions (sections). These will be referred to as an upper portion and a lower portion merely for the sake of orientation and explanation (as can be understood from Fig. 6 described in more detail later).

The data writing may begin at the bottom-most row of the upper portion, and may begin at the top-most row of the lower portion. Both of the portions correspond to a relatively central region of the display screen. The scanning is proceeded within the upper portion one (or more) row(s) at a time towards the upper end of the overall display screen, and within the lower portion one (or more) row(s) at a time towards the lower end of the overall display screen. Here, the scanning may be performed in the upper and lower portions in a relatively simultaneously manner. Alternatively, the scanning may be performed in an alternating manner, for each unit of scan row lines of the upper portion and of the lower portion, respectively.

It can be understood that the overall display screen could be divided into more than two portions, depending upon various factors, such as the size of the display screen, processing capabilities, etc.

The present invention not only results in improved quality in displayed image portions at a central region of the display screen, but also, the required amount of necessary memory space and power consumption may be reduced. Such minimal memory requirements and efficient use of power are important for multimedia communications devices, such as mobile phones, PDAs, and other wireless devices having mobility characteristics and video and image reproduction capabilities. Digital multimedia broadcasting (DMB) technologies (e.g., satellite DMB, terrestrial DMB, etc.), downloading streaming videos from Internet servers, performing multimedia communications via wireless interfaces (Wi-Fi, Wi-MAX, etc.) and the like, are some non-limiting examples of practical applications that would benefit from the teachings and suggestions of the present invention.

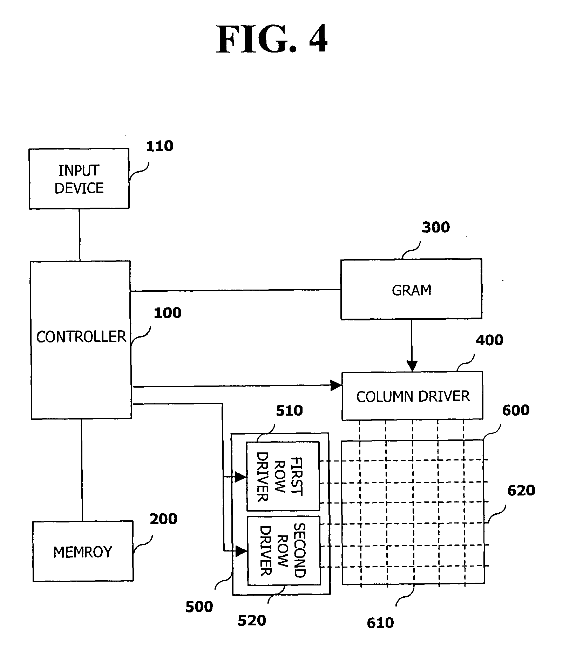

FIG. 4 is a view showing an apparatus for driving a display unit of a mobile communication terminal according to the present invention.

As shown in FIG. 4, the apparatus for driving a display unit of a mobile communication terminal according to the present invention includes: an input device 110 for receiving image data to be displayed; a memory 200 for storing input image data; a controller 100 for receiving the stored image data and a synchronization signal and outputting the received image data and the synchronization signal; a memory (e.g., a graphic random access memory GRAM)) 300 for storing the output image data in units of lines of a predetermined number within a frame; a column driver 400 for receiving the stored image data and the synchronization signal and outputting a signal voltage to column addresses based on the received image data and synchronization signal; a row driver 500 for outputting a scan voltage to row addresses of the output signal voltage based on the received synchronization signal; and a display panel 600 for displaying the received image data thereon based on the scan voltage output from the row driver and the signal voltage output from the column driver. Here, the synchronization signal includes a vertical synchronization signal input into the column driver 400 and a horizontal synchronization signal input into the row driver 500.

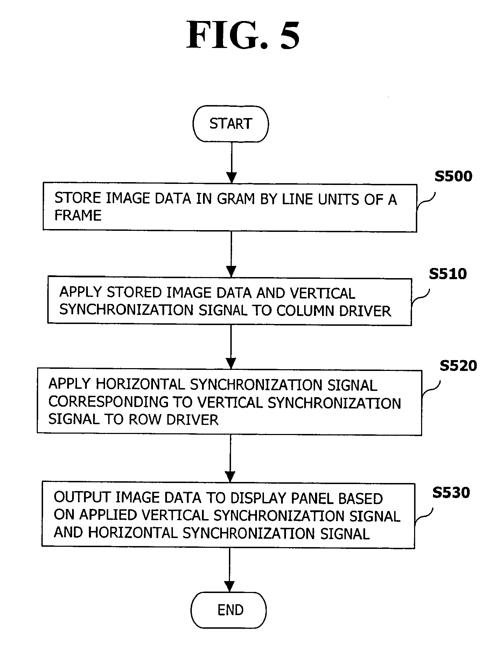

A method of driving such display unit of a mobile communication terminal according to the present invention will be described with reference to FIG. 5.

FIG. 5 is a flow chart showing an exemplary method for driving a display unit of a mobile communication terminal according to the present invention.

As shown in FIG. 5, the method for driving a display unit of a mobile communication terminal according to a present embodiment includes: storing image data in a memory (e.g., GRAM) by line units of a frame, each line unit including a predetermined number of row lines (S500); applying the stored image data and a vertical synchronization signal to a column driver (S510); providing a horizontal synchronization signal corresponding to the provided vertical synchronization signal to at least one row driver (S520); and outputting the image data to a display panel based on the provided vertical synchronization signal and the provided horizontal synchronization signal (S530).

The row driver includes a first row driver that drives an upper portion of the display panel, and a second row driver that drives a lower portion of the display panel. The first row driver starts to process image data by beginning with the bottom-most row line of the upper portion, and continues to process up to the top-most row line of the upper portion, and the second row driver starts to process image data by beginning with the top-most row line of the lower portion, and continues to process up to the bottom-most row line of the upper portion.

A method for driving such display unit of a mobile communication terminal according to the present invention will now be described in detail.

First, the controller 100 is configured to output various operation information for controlling and monitoring each function of the mobile communication terminal, to output messages, such as SMS (Short Message Service) messages or an MMS (multimedia message service) messages and graphical messages to the GRAM 300, and to output a vertical synchronization signal and a horizontal synchronization signal.

The GRAM 300 receives and stores the image data provided by the controller by line units of a frame, each line unit including a predetermined number of row lines (S500), and outputs the stored image data to the column driver 400.

The capacity of the GRAM 300 storing image data will be described with an example under an assumption that the display panel 600 has a resolution of 176 x 240 pixels and one pixel is 18 bits long. However, it can be clearly understood that the present invention is applicable to other displays having different resolutions and pixel lengths.

While the GRAM 300 requires a capacity of at least 176 x 240 x 18 bits (i.e., 760,320 bits) in order to store the image data by a frame as in the related art, the GRAM 300 of the present embodiment only requires a capacity of 176 x 18 bits (i.e., 3,168 bits) to store image data by a line unit including one row line and a capacity of 76 x 2 x 18 bits (i.e., 6,336 bits) to store image data by a line unit including two row lines, and thus can reduce the capacity of the GRAM 300 for temporarily storing image data therein.

The column driver 400 receives the stored image data and a vertical synchronization signal (S510). The column driver 400 then outputs the image data by a frame of column lines to the display panel 600 in a vertical direction according to the applied vertical synchronization signal applied in the order of column addresses. The column driver 400 drives column electrodes 610 of the display panel 600, and serves to actually apply image data, i.e., a signal voltage to each pixel of the display panel 600 through the column electrodes 610.

The row driver 500 receives a horizontal synchronization signal corresponding to the applied vertical synchronization signal (S520). The row driver 500 then disperses the image data outputted by the frame of column lines in the vertical direction of the display panel 600 by the column driver 400 in a horizontal direction based on the applied horizontal synchronization signal in a predetermined order of row addresses. The row driver 500 generates scan signals for sequentially selecting the row electrodes 620 and drives the row electrodes 620.

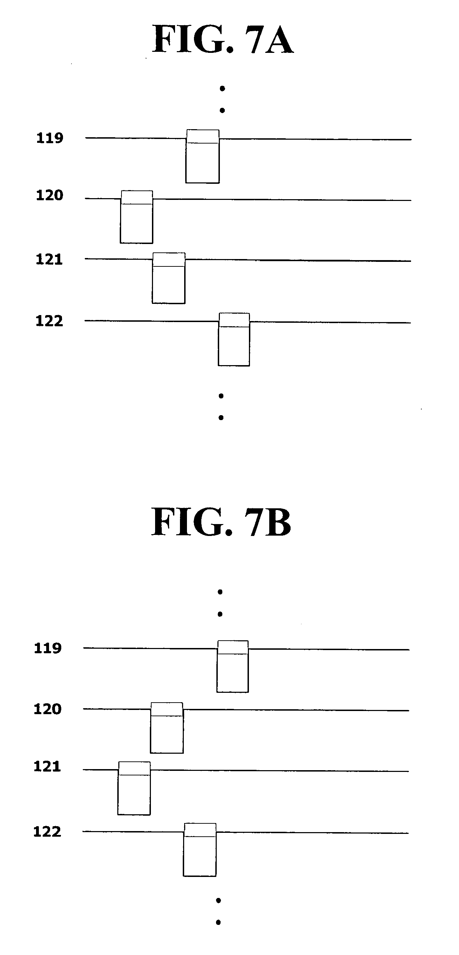

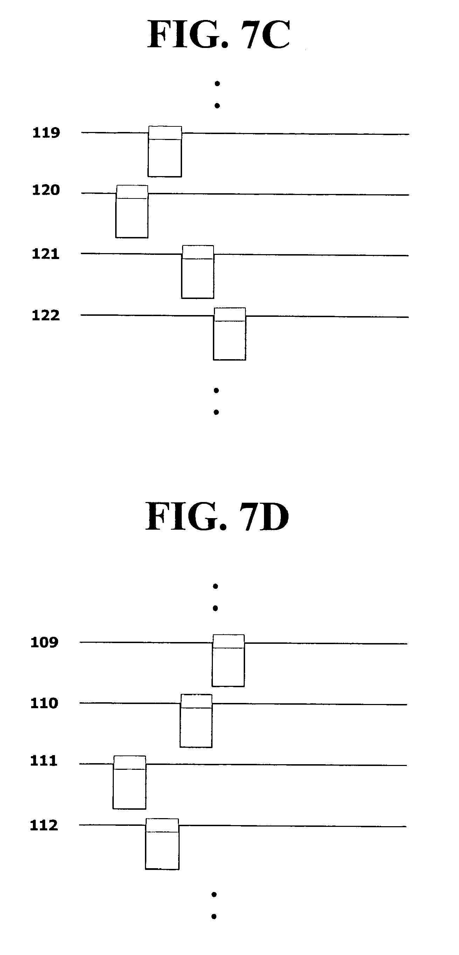

The row driver 500 divides the total number of row address into two sections, and employs a first row driver 510 that first processes the image data associated with a substantially center line of the display panel and then keeps processing the image in an upward direction, and employs a second row driver 520 that first processes the image data associated with substantially a center line of the display panel and then keeps processing the image data towards a downward direction. Hereinafter, the direction and order of display of image data upward and downward alternately on the display unit of the mobile communication terminal of the present invention will be described in more detail with reference to FIGs. 6 and 7.

FIG. 6 is a view for explaining the direction and order of display of image data on a display unit of a mobile communication terminal according to the present invention.

As shown in FIG. 6, in the display unit having the row lines is divided into two large regions (i.e., upper and lower portions). The lines of the upper portion are driven by the first row driver and the lines of the lower portion are driven by the second row driver in up and down directions or in down and up directions in an alternating manner. In more detail, the bottom-most row address 120 of the upper portion begins to be processed by the first row driver, and the top-most row address 121 of the lower portion is then processed by the second row driver. Next, the row address 119 of the upper portion and the row address 122 of the lower portion are sequentially processed, respectively. This alternate process is then continued until the row address 001 of the upper portion and the row address 240 of the lower portion are processed.

The GRAM requires a capacity of at least 176 x 18 bits (i.e., 3,168 bits) in order to store image data provided in a line unit of row lines in one frame.

The lines at the upper portion driven by the first row driver and the lines at the lower portion driven by the second row driver may be processed in up and down directions in an alternating manner by a line unit containing two row lines. In more detail, the two bottom-most row addresses 120 and 119 of the upper portion begin to be processed by the first row driver, and the two top-most row addresses 121 and 122 of the lower portion are then processed by the second row driver. And then, the two row addresses next to the two bottom-most row addresses 120 and 119 of the upper portion and the two addresses next to the row addresses 122 and 121 of the lower portion are sequentially processed, respectively. This alternate process is then continued until the row address 001 of the upper portion and the row address 240 of the lower portion are processed.

The GRAM requires a capacity of at least 176 x 18 x 2 bits (i.e., 6,336 bits) in order to store image data provided in a line unit including two row lines of one frame.

Hereinafter, a timing state for a scan voltage applied to the row electrodes of the display panel will be described with reference to FIGs. 7A to 7D.

FIGs. 7A to 7D are views showing a timing state for a scan voltage outputted to row electrodes of a display panel according to the present invention.

FIG. 7A shows the scan voltage is outputted by beginning with the row address 120 in the upper portion line by line in an alternating manner between the upward direction in the upper portion and the downward direction in the lower portion. FIG. 7B shows the scan voltage is outputted by beginning with the row address 121 in the lower portion line by line in an alternating manner between the downward direction in the lower portion and the upward direction in the upper portion.

FIG. 7C shows the scan voltage is outputted by beginning with the row addresses 120 and 119 in the upper portion two-line by two-line in an alternating manner between the upward direction in the upper portion and the downward direction in the lower portion. FIG. 7D shows the scan voltage is outputted by beginning with the row addresses 121 and 122 in the lower portion two-line-by two-line in an alternating manner between the downward direction in the lower portion and the upward direction in the upper portion.

Hence, the row addresses of the display unit 600 of the mobile communication terminal according to an embodiment are divided into two portions, the row addresses at the upper portion are driven by the first row driver 510 in upward direction and the row addresses at the lower portion are driven by the second row driver 520 in downward direction and the upper and lower portions are driven in an alternating manner by at least one line unit including at least at least one row address.

Subsequently, the display panel 600 is configured by units of pixels, in which column electrodes 610 and row electrodes 620 cross each other, and can display the image data by the column driver 400 applying a signal voltage to the column electrodes 610 and the first and second row drivers 510 and 520 applying a scan voltage to the row electrodes 620 (S530).

It is noted that, in a similar manner, the column driver 400 of the display unit may divided into a right portion and a left portion configured to be driven by a first column driver and a second column driver, respectively.

As described above in detail, the apparatus and method for driving a display unit of a mobile communication terminal according to the present invention improves the image quality efficiently by relatively minimizing errors occurring at or near the center region of the screen (where the user's view is typically focused on) by storing image data in a GRAM line units of a frame, each line unit including a predetermined number of row lines and displaying the stored image data, starting from the line at or near the center of the display unit.

The apparatus and method for driving a display unit of a mobile communication terminal according to the present invention can reduce manufacturing costs since the capacity of a GRAM storing image data can be reduced by storing image data in a GRAM by line units of a frame, each line unit including a predetermined number row lines and displaying the stored image data, starting from the line at or near the center of the display unit.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

Although the present specification describes components and functions that may be implemented in particular embodiments with reference to particular standards, the invention is not limited to such standards. Each of the standards represents examples of the state of the art. Such standards are periodically superseded by faster or more efficient equivalents having essentially the same functions. Accordingly, replacement standards having the same or similar functions are considered equivalents thereof.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The above disclosed subject matter is to be considered illustrative, and not restrictive, and the appended claims are intended to cover all such modifications, enhancements, and other embodiments which fall within the true spirit and scope of the present invention. Thus, to the maximum extent allowed by law, the scope of the present invention is to be determined by the broadest permissible interpretation of the following claims and their equivalents, and shall not be restricted or limited by the foregoing detailed description.

Although the invention has been described with reference to several exemplary embodiments, it is understood that the words that have been used are words of description and illustration, rather than words of limitation. As the present invention may be embodied in several forms without departing from the spirit or essential characteristics thereof, it should also be understood that the above-described embodiments are not limited by any of the details of the foregoing description, unless otherwise specified. Rather, the above-described embodiments should be construed broadly within the spirit and scope of the present invention as defined in the appended claims. Therefore, changes may be made within the metes and bounds of the appended claims, as presently stated and as amended, without departing from the scope and spirit of the invention in its aspects.

## Claims

1. An apparatus for driving a display unit of a mobile communication terminal, comprising:
a memory that stores image data by line units of a frame, each line unit including a predetermined number of row lines;
at least one column driver that receives the stored image data and a vertical synchronization signal and outputs a signal voltage to column addresses based on the received image data and the received vertical synchronization signal;
at least one row driver that receives a horizontal synchronization signal corresponding to the vertical synchronization signal and outputs a scan voltage to row addresses based on the received horizontal synchronization signal; and
a display panel that displays the image data thereon based on the output signal voltage and the output scan voltage.

2. The apparatus of claim 1, wherein the row driver comprises:
a first row driver that drives an upper portion of the display panel; and
a second row driver that drives a lower portion of the display panel.

3. The apparatus of claim 2, wherein:
the first row driver sequentially outputs the scan voltage to display the image data in an upward direction in the display panel; and
the second row driver sequentially outputs the scan voltage to display the image data in a downward direction in the display panel.

4. The apparatus of claim 3, wherein the upward and downward directions of display begin from the row addresses at or near a center of the display panel, respectively.

5. The apparatus of claim 3, wherein, when the display panel has an N number of row lines, the upper portion of the display panel includes the row lines from the first row line to the N/2-th row line and the lower portion of the display panel includes the row lines from the (N/2+1)-th row line to the N-th row line.

6. The apparatus of claim 3, wherein the first row driver and the second row driver operate in an alternating manner by alternately driving the upper and lower portions of the display panel.

7. The apparatus of claim 4, wherein the first row driver and the second row driver respectively drive the display panel in an alternating manner between the upper and lower portions of the display panel.

8. The apparatus of claim 6, wherein the first row driver and the second row driver drive at least one row line, respectively.

9. The apparatus of claim 3, wherein the second row driver and the first row driver respectively drive the display panel in an alternating manner between the lower and upper portions of the display panel.

10. The apparatus of claim 4, wherein the second row driver and the first row driver respectively drive the display panel in an alternating manner between the lower and upper portions of the display panel.

11. The apparatus of claim 9, wherein the second row driver and the first row driver drive at least one row line, respectively.

12. The apparatus of claim 1, wherein the line unit includes at least one row line.

13. The apparatus of claim 1, wherein the display panel is a liquid crystal display panel, an organic electro-luminescence display panel or a plasma display panel.

14. A method for driving a display unit of a mobile communication terminal, comprising:
storing image data in a memory by line units of a frame, each line unit including a predetermined number of row lines;
receiving the stored image data and a vertical synchronization signal and outputting a signal voltage to column addresses based on the received image data and the received vertical synchronization signal;
receiving a horizontal synchronization signal corresponding to the vertical synchronization signal and outputting a scan voltage to row addresses based on the received horizontal synchronization signal; and
displaying the image data on a display panel based on the outputted signal voltage and the outputted scan voltage.

15. The method of claim 14, wherein the outputting a scan voltage comprises:
first outputting to drive an upper portion of the display panel; and
second outputting to drive a lower portion of the display panel.

16. The method of claim 15, wherein:
the first outputting comprises sequentially outputting the scan voltage to display in an upward direction in the display panel; and
the second outputting comprises sequentially outputting a scan voltage to display in a downward direction in the display panel.

17. The method of claim 16, wherein the upward and downward directions of display begin from the row addresses at or near a center of the display panel, respectively.

18. The method of claim 16, wherein, when the display panel has an N number of row lines, the upper portion of the display panel includes the row lines from the first row line to the N/2-th row line and the lower portion of the display panel includes the row lines from the (N/2+1)-th row line to the N-th row line.

19. The method of claim 16, wherein the first outputting and the second outputting are performed in an alternating matter by alternately performing the first outputting and the second outputting..

20. The method of claim 17, wherein the first outputting and the second outputting are performed in an alternating matter by alternately performing the first outputting and the second outputting.

21. The method of claim 19, wherein the first outputting and the second outputting drive at least one row line, respectively.

22. The method of claim 16, wherein the second outputting and the first outputting are performed in an alternating matter by alternately performing the second outputting and the first outputting.

23. The method of claim 17, wherein the second outputting and the first outputting are performed in an alternating matter by alternately performing the second outputting and the first outputting.

24. The method of claim 22, wherein the second outputting and the first outputting drive at least one row line, respectively.

25. The method of claim 14, wherein the line unit includes at least one row line.

26. The method of claim 14, wherein the display panel is a liquid crystal display panel, an organic electro-luminescence display panel or a plasma display panel.

27. An apparatus for processing image data for a mobile communication terminal, comprising:
a memory that stores image data by line units of a frame, each line unit including a predetermined number of row lines;
at least one column driver that receives the stored image data from the memory, receives a vertical synchronization signal, and outputs signal voltages to column addresses based on the received image data and the received vertical synchronization signal;
at least one row driver that receives a horizontal synchronization signal corresponding to the vertical synchronization signal, and outputs scan voltages to row addresses based on the received horizontal synchronization signal; and
a processor that cooperates with the memory, the column driver, and the row driver, to display the image data based on the output signal voltages from the column driver and the scan voltages from the row driver.

28. The apparatus of claim 27, wherein the processor provides the vertical synchronization signal to the column driver and provides the horizontal synchronization signal to the row driver.

29. The apparatus of claim 27, further comprising:
an input device that receives image data to be displayed; and
a display screen having a matrix of pixel cells with row addresses and column addresses to display the image data.

30. The apparatus of claim 29, wherein the input device is a transceiver that receives still images and/or videos via a wired or wireless interface.

31. The apparatus of claim 29, wherein the input device is an image capture device that captures still images and/or videos.

32. The apparatus of claim 29, wherein the processor cooperates with the memory, the column driver, the row driver, the input device, and the display screen to write image data on at least two separate portions of the display screen.

33. The apparatus of claim 32, wherein the two separate portions of the display screen are an upper portion and a lower portion, and the processor cooperating with the memory, the column driver, the row driver, the input device, and the display screen, starts writing image data by beginning scanning at the bottom-most row line of the upper portion, and at the top-most row line of the lower portion.

34. The apparatus of claim 33, wherein the scanning is proceeded within the upper portion at least one row at a time towards the upper end of the display screen, and proceeded within the lower portion at least one row line at a time towards the lower end of the display screen.

35. The apparatus of claim 34, wherein the scanning is performed in an alternating manner, by alternately scanning the row lines of the upper portion and of the lower portion, respectively.

36. The apparatus of claim 34, wherein the scanning is performed in the upper and lower portions in a relatively simultaneously manner.

37. The apparatus of claim 29, wherein the display screen is a liquid crystal display, an organic electro-luminescence display or a plasma display.
